**Europäisches Patentamt**

**European Patent Office**

**Office européen des brevets**

(19)

(11) Veröffentlichungsnummer: **0 086 948**
**B1**

(12) # EUROPÄISCHE PATENTSCHRIFT

(45) Veröffentlichungstag der Patentschrift:
30.04.86

(51) Int. Cl.⁴: **F 24 J 3/00, F 16 L 59/06**

(21) Anmeldenummer: **83100382.7**

(22) Anmeldetag: **18.01.83**

(54) **Wärme- und Kältespeicher.**

(30) Priorität: **11.02.82 DE 3204849**
**20.03.82 DE 3210370**

(43) Veröffentlichungstag der Anmeldung:
**31.08.83 Patentblatt 83/35**

(45) Bekanntmachung des Hinweises auf die Patenterteilung:
**30.04.86 Patentblatt 86/18**

(84) Benannte Vertragsstaaten:
**AT BE CH DE FR GB IT LI NL SE**

(56) Entgegenhaltungen:
**EP - A - 0 012 038**
**DE - A - 2 738 254**
**DE - A - 3 003 798**

(73) Patentinhaber: **Helmbold, Walter, Professor Dr., Vor der Hurth 31, D-5902 Unglinghausen (DE)**

(72) Erfinder: **Helmbold, Walter, Professor Dr., Vor der Hurth 31, D-5902 Unglinghausen (DE)**

(74) Vertreter: **Brose, Manfred, Dr., Pellergasse 45, D-8500 Nürnberg 50 (DE)**

## Beschreibung

Die Erfindung betrifft einen Speicher für die Speicherung von Wärme oder Kälte, vorzugsweise über lange Speicherzeiten.

Zur Versorgung der Bevölkerung mit Strom und Wärme wird in der Zukunft immer mehr auf die Solarenergie zurückgegriffen werden müssen, da die direkte Ausnutzung der Solarenergie ohne umweltschädliche Nebeneffekte möglich ist. Aus diesem Grunde wird die photovoltaische Solarzelle weltweit intensiv erforscht, da sie es erlaubt, Sonnenlicht mit einem Wirkungsgrad bis zu maximal 25 % direkt in Elektrizität umzuwandeln.

Elektrischer Strom ist eine hochwertige Energieform. Mit Strom ist es unter anderem möglich, geeignete Speichermassen auf hohe Temperaturen aufzuheizen. Wenn man nun davon ausgeht, daß etwa die Hälfte der Bevölkerung der Bundesrepublik Deutschland in Ein- oder Zweifamilienhäusern wohnt, deren Dächer je nach Lage und Ausrichtung zwischen dem Vier- und Fünffachen des winterlichen Heizbedarfs an Sonnenenergie zugestrahlt bekommt, so führt diese Gegebenheit zu dem Konzept, mit Solarzellenstrom einen Speicher auf hohe Temperaturen aufzuheizen und diesem Speicher in Zeiten des Wärmebedarfs die Wärme zu entnehmen. Da die Zeit höchster Sonnenenergieeinstrahlung im Sommer liegt und der größte Wärmebedarf im Winter gegeben ist, benötigt dieses auf der Sonnenenergie beruhende Heizkonzept einen technisch robusten Langzeit-Wärmespeicher, der die Wärme des im Sommer aufgeladenen Wärmespeichers ohne große Verluste bis zum Winter speichert und eine einfache Wärmeentnahme gestattet.

Es sind Speicher für die Speicherung von Wärme oder Kälte mit einem Außenbehälter, einer elektrisch, chemisch oder thermisch aufheizbaren oder kühlbaren Speichermasse und einer zwischen Außenbehälter und Speichermasse angeordneten Isolierschicht bekannt. Wie die Praxis zeigt, ist ein derartiger Wärmespeicher mit einer Isolierschicht aus natürlichen oder künstlichen Isolierstoffen, wie z. B. Polyurethan, zur ausreichend langen Speicherung nicht in der Lage.

Aus dem Buch von Gröbner, Erk und Grigull "Grundgesetze der Wärmeübertragung" (Springer Verlag, Berlin, Göttingen, Heidelberg) 1963, Seite 137, sind doppelwandige Flüssiggasspeicher bekannt, mit einer unter Vakuum stehenden körnig-porösen Isoliermasse in der von der Doppelwand gebildeten Isolierschicht. Solche Speicher sind jedoch entweder nur für geringe Volumina gedacht, oder sie müssen sehr dickwandig und damit sehr schwer sein.

In der DE-A- 30 03 798 wird ein Speicher fur die Speicherung von Wärme, vorzugsweise über lange Speicherzeiten bescrieben, mit einem Außenbehälter, einer thermisch aufheizbaren oder kühlbaren Speichermasse in einem Speicherkern und einer zwischen Außenbehälter und Speicherkern angeordneten, evakuierten Isolierschicht, wobei die aus einer körnig-porösen Isoliermasse bestehende Isolierschicht unter einem Vakuum steht. Bei diesem Speicher besteht der Innenbehälter aus einer flexiblen Innenhaut, die sich unter dem Einfluß des Unterdrucks in der Isolierschicht eng an die Isoliermasse anlegt. Einem derartigen Speicher haftet der Nachteil an, daß er infolge seines konstruktiven Aufbaues nur für niedrige Temperaturen bis maximal 100° C verwendbar ist.

In der EP-A- 0 012 038 ist ferner ein Doppelwandspeicher beschrieben, bei dem die Isolierscbicht unter einem derartigen Vakuum steht, daß der Smoluchowski-Effekt eintritt. Dieser Speicher dient als Doppelwandspeicher zur Speicberung verflüssigter Gase bei tiefen Temperaturen, wie z.B. flüssigen Sauerstoff, Stickstoff, Wasserstoff, Helium od.dgl.. Als Hochtemperaturspeicher ist dieser Speicher ungeeignet.

Der Erfindung liegt daher die Aufgabe zugrunde, einen Langzeitwärmespeicher mit einem Außenbehälter, einer aufheizbaren oder kühlbaren Speichermasse in einem Speicherkern und einer zwischen Außenbehälter und Speicherkern angeordneten Isolierschicht aus einer unter Vakuum stehenden körnigen Isoliermasse mit einem möglichst geringem Gewicht für möglichst hohe Speichertemperaturen zu schaffen.

Diese Aufgabe wird nach der Erfindung dadurch gelöst, daß in dem Speicher Isolierschicht und Speichermasse druckmäßig miteinander verbunden sind. Dieser konstruktive Aufbau des Speichers bedeutet eine beträchtliche Gewichts- und Kosteneinsparung. Außerdem wird die Sicherheit des Speichers erhöht, da kein Innenbehälter den hohen Speichertemperaturen ausgesetzt wird.

In den Zeichnungen sind Ausführungsbeispiele der Erfindung wiedergegeben. Es zeigen:

Fig. 1 einen Speicher für hohe Temperaturen mit einer Isolierschicht ohne Druckausgleich und mit einem flächenhaften Wärmetauscher in der Außenwand,

Fig. 2 die Wärmeleitfähigkeit von grob- und fein-körnig-porösen Isolierstoffen als Funktion des Drucks in der Isolierschicht (Prinzipskizze) des "Smoluchowski-Effektes")

Fig. 3 einen Speicher wie der Speicher nach Fig. 1, jedoch mit einem rohrförmigen Wärmetauscher,

Fig. 4 einen Speicher für hohe Temperaturen mit Druckausgleich und einem rohrförmigen Wärmetauscher,

Fig. 5 einen Speicher für hohe Temperaturen mit Druckausgleich und mit einem flächenhaften Wärmetauscher und

Fig. 6 einen Speicher für hohe Temperaturen mit Druckausgleich und einem Rippenrohr-Wärmetauscher.

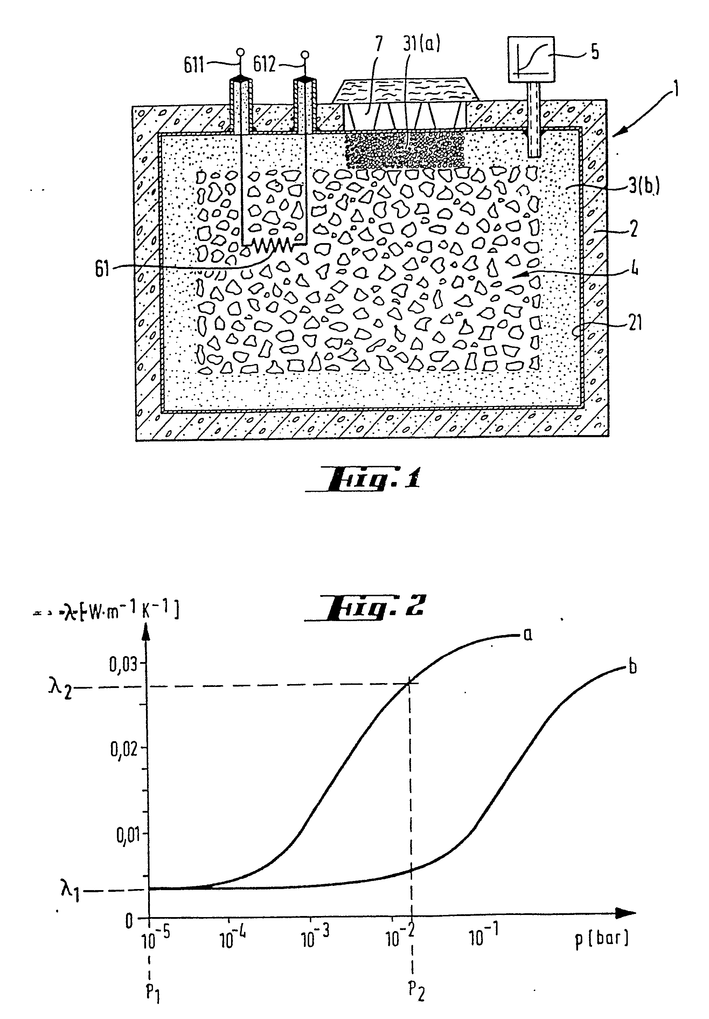

Bei einer Speicherung von Wärme in einem Speicher 1 nach Figur 1 treten in Abhängigkeit von der Speicherzeit Verluste auf. Nimmt man an, daß in einem Speicher im Zeitpunkt t = 0 die Wärmemenge $Q_0$ gespeichert worden ist und daß von außen keine Nutzwärme entzogen worden ist, so läßt sich zum Zeitpunkt t die Wärmemenge Q (t) durch folgende Gleichung näherungsweise beschreiben:

$$Q(t) = Q_0 \, e^{-\frac{t}{\tau}} \qquad \text{mit} \qquad \tau = \frac{\rho c}{\lambda} \cdot \frac{V}{A} \, d$$

mit $\rho$ = Dichte der Speichermasse
c = spezifische Wärme der Speichermasse
$\lambda$ = Wärmeleitfähigkeit der Isolierung
V = Speichervolumen
A = mittlere Oberfläche der Isolierschicht
d = Isolierschichtdicke

Diese Gleichung gilt unter der Voraussetzung, daß die Isolierschichtdicke d relativ klein gegenüber den Speicherdimensionen ist. Hat der Speicher die Form eines Kubus mit dem Volumen $V = a^3$, so muß d $\ll$ a sein. Der Faktor

$$\frac{\rho \, c}{\lambda}$$

enthält nur Materialkonstanten. Der Faktor

$$\frac{V \cdot d}{A}$$

kennzeichnet die Geometrie des Speichers. Aus der Gleichung $Q(t) = Q_o \, e^{-\frac{t}{\tau}}$

folgt, daß, wenn eine Speicherung der Wärme über lange Speicherzeiten gewünscht wird, die Zeitkonstante $\tau$ sehr gross sein muß.

Die herkömmlichen Isolierstoffe haben eine zu hohe $\lambda$, so daß $\lambda$ zu klein ist. Feinkörnige Pulver, wie z. B. pyrogene Kieselsäure, liegen zwar mit ihrer in der gewünschten Größenordnung, sie sind aber für eine Anwendung im großen Maßstab viel zu teuer.

Wesentlich kleinere lassen sich jedoch durch eine Anwendung des "Smoluchowski-Effektes" erreichen. Hierbei besteht beim Speicher 1 nach Figur 1 die Isolierschicht 3 aus einer feinkörnigen oder feinfaserigen Masse. Durch dieses Material wird der Anteil der Punkt-Punkt-Leitung, der Wärmestrahlung und die Wechselwirkung zwischen Strahlung und Wärmeleitung in der feinfaserigen oder feinkörnigen Isoliermasse klein. Diese Anteile lassen sich noch dadurch weiter verkleinern, daß die Teilchen der Isoliermasse mit einer Infrarot reflektierenden Masse beschichtet werden. Hierfür eignet sich z.B. Magnesiumoxid. Auch die bekannte Isoliermasse "Minileit" ® enthält ein Infrarot reflektierendes Pulver. Herrscht nun in der Isolierschicht normaler Luftdruck, so werden die vorstehend beschriebenen Anteile der Punkt-Punkt-Leitung, der Wärmestrahlung und der Wechselwirkung zwischen Strahlung und Wärmeleitung vollständig von der Wärmeleitung der Luft überdeckt. Wird aber die Luft aus der Isolierschicht 3 durch eine Vakuumpumpe 5 abgepumpt, dann tritt der "Smoluchowski-Effekt" ein. Die Wärmeleitfähigkeit der Luft verschwindet, und die effektive Wärmeleitfähigkeit $\lambda_{eff}$ der Isolierschicht 2 besteht nur noch aus dem in wiederholter Punktberührung der in Reihe liegenden Isolierkörner klein gewordenen Leitungsanteil, dem Strahlungsanteil und dem Wechselwirkungsanteil zwischen Strahlung und Wärmeleitfähigkeit der Teilchen der Isoliermasse. Mit einer derartigen Isoliermasse lassen sich von $\lambda \approx 0{,}003\,\text{W/mK}$ erreichen, so wie diese für eine Langzeitspeicherung notwendig sind. Es versteht sich, daß die vorstehend beschriebenen Wärmetransportanteile um so größer werden, je höher die Temperatur des Speicherkerns 4 ist. Ein Speicher 1 mit einer Isolierschicht 3 nach dem "Smoluchowski-Effekt" und einem geeigneten Speicherkern 4 läßt sich elektrisch mit einer Widerstandsheizung, einer induktiven oder dielektrischen Heizung, aber auch über Wärmetauscher, z. B. mit durch Verbrennung erzeugter Heizwärme, auf hohe Temperaturen aufheizen.

Als Beispiel sei ein Speicher 1 nach Figur 1 angenommen, bei dem der Speicherkern 4 aus gerütteltem Basaltsplitt bestehen möge. Hierfür gilt:

$\rho = 2{,}35 \cdot 10^3 \text{ kg/m}^3$
$c = 0{,}25 \cdot 10^{-3} \text{ kWh/KgK}$
$\lambda = 0{,}003 \text{ W/mK}$
$d = 0{,}5 \text{ m}$

$$\frac{V}{A}$$

Hieraus folgt eine Zeitkonstante $\tau$ von:
$\tau = 48\,958\,\text{h} \approx 5\,1/2$ Jahren.

Der Speicher 1 besteht aus einem Außenbehälter 2, einer Isolierschicht 3 und dem Speicherkern 4. Der Außenbehälter 2 ist aus Beton-Fertigteilen zusammengesetzt und hat ein Edelstahlblech 21 auf der Innenseite. Das Edelstahlblech 21 stellt die vakuumdichte Hülle dar. Im Speicherkern 4 kann als Speichermasse, wie vorstehend bereits angegeben worden ist, Basaltsplitt verwendet werden. Mit einem elektrischen Heizwiderstand 61 wird der Speicherkern 4 aufgeheizt. An die vakuumdichten Stromzuführungen 611, 612 kann eine Gleich- oder Wechselspannung angelegt werden. In dem angegebenen Beispiel ist zwischen der Speichermasse 4 und der Isolierschicht 3 keine Trennwand vorhanden. Vielmehr wird der gesamte Speicherinhalt, also auch der Speicherkern 4, durch die Vakuumpumpe 5 evakuiert.

Zur Wärmeentnahme aus dem Speicher 1 ist ein Bereich 31 der Isolierschicht 3 mit einer Isoliermasse a grober Körnung angefüllt, während normalerweise eine Isoliermasse b feiner Körnung in der Isolierschicht 3 vorhanden ist. Die unterschiedliche Körnung hat zur Folge, daß in der Isoliermasse a die mittlere freie Weglänge der Luftmoleküle der Restluft deutlich größer als in der feinkörnigen Isoliermasse b ist. In Figur 2 ist die

Wärmeleitfähigkeit $\lambda$ der beiden Massen a, b als Funktion des Luftdrucks p in der Isolierschicht aufgetragen. Bei dem geringen Druck $p_1$ wird der Speicher aufgeheizt, während zur Wärmeentnahme der Druck $p_2$ eingestellt wird. Bei dem Druck $p_2$ ist die Wärmeleitfähigkeit der feinkörnigen Isoliermasse b praktisch unverändert, während die der grobkörnigen Isoliermasse a stark erhöht ist. Daher kann im Bereich des Wärmetauschers 7 an der Außenwand des Speichers 1 der Wärmefluß

Q $\lambda$ 2 - $A_{WT}$ D $\Delta$ v

mit $A_{WT}$ = Wärmetauscherfläche

$\Delta$ v = nutzbare Temperaturdifferenz

d = Isolierstoffdicke der groben Körnung

$\lambda_2$ = Wärmeleitfähigkeit der groben Körnung nach Übergang auf $p_2$, S. Fig. 2. abgenommen werden, während die übrigen Isolierschichtbereiche noch voll isolieren.

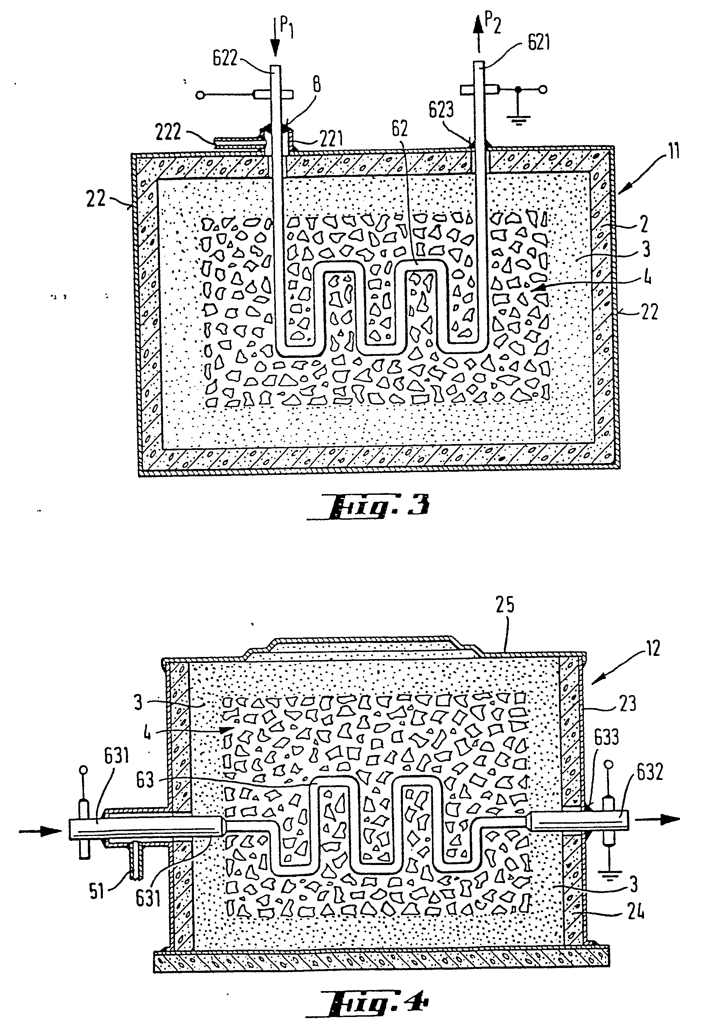

In Figur 3 ist ein Speicher 11 mit einer vakuumdichten Außenhaut 22, einer Isolierschicht 3 und einem Speicherkern 4 wiedergegeben. Im Gegensatz zum Speicher 1 nach Figur 1 ist der Speicher 11 jedoch mit einem röhrenförmigen Heizwiderstand 62 ausgestattet. Dieses hat den Vorteil, daß man mit zwei Durchbrechungen der vakuumdichten Außenhaut 22 auskommt. Das röhrenförmige Heizelement 62 dient bei der Aufheizung als elektrischer Heizwiderstand und bei der Wärmeentnahme als Wärmetauscher. Es ist auch möglich, über den röhrenförmigen Heizwiderstand Verbrennungswärme in den Speicher 11 einzuspeichern.

Die Nachheizung ist vorgesehen für die winterliche Heizperiode nach sonnenscheinarmem Sommer oder nach Reparaturen. Die Solarzellenfläche braucht dann nicht mehr nach dem kältesten Sommer dimensioniert (d. h. überdimensioniert) zu werden. Die eine Zuführung 621 des Heizelementes 62 ist mit einer Schweißnaht 623 direkt mit der Außenhaut 22 verbunden und liegt mit dieser an Massepotential. Die andere Zuführung 622 des Heizelementes 62 ist durch einen mit der Außenhaut 22 verbundenen Rohrstutzen 221 hindurchgeführt. Ein Isolator 8 stellt eine Dichtung und Lagerung der Zuführung 622 im Rohrstutzen 221 dar. Der Rohrstutzen 221, der bei Bedarf zusätzlich gekühlt werden kann, bewirkt, daß der Isolator 8 thermisch nicht belastet wird. Eine Vakuumpumpe ist über das Rohr 222 angeschlossen. Soll dem Speicher 11 Wärme entnommen werden, so kann dieses durch ein in das Heizelement 62 eingeleitetes Wärmeträgermedium, bei hohen Speichertemperaturen vorzugsweise Luft, erfolgen. Die Fließrichtung des Mediums ist durch die beiden Pfeile $P_1$, $P_2$ angegeben. Das relativ kühle Medium tritt durch die isolierte Zuführung 622 ein und das im Speicherkern 4 aufgeheizte Medium durch die an Masse liegende Zuführung 621 aus, so daß auch hier der Isolator 8 thermisch relativ wenig belastet wird. Bei einer Aufheizung des Speichers 11 durch Verbrennungsgase ist die Fließrichtung der Heizgase aus dem gleichen Grunde genau umgekehrt.

In Figur 4 ist ein Speicher 12 für hohe Temperaturen wiedergegeben. Der Speicher 12 besteht aus einem vakuumdichten Behälter 23, einem Betonmantel 24, der Isolierschicht 3 und dem Speicherkern 4. Eine Schwachstelle großer Vakuumbehälter ist die Behälterwand 23, 24, die nur mit großem Aufwand gegen eine Implosion geschützt werden kann. Nun ist der in Figur 4 wiedergegebene Speicher 12 zwar nicht leer, von einer gleichmäßigen Verteilung der von außen wirkenden Druckspannungen kann aber nicht ausgegangen werden. Deshalb ist ein Teil der Behälterwand als elastischer Wellfederdeckel 25 ausgebildet. Es besteht aber auch die Möglichkeit, diesen Teil der Behälterwand aus plastischem Material herzustellen. Ist der Vakuumbehälter 23 zylindrisch, dann kann auch der Zylindermantel oder ein Teil davon aus Wellblech oder Tellerfedern-Ringelementen aufgebaut werden. Beim Evakuieren drückt sich der Zylindermantel in einer derartigen Ausgleichszone wie eine Ziehharmonika zusammen und stellt im Zusammenwirken mit der Isoliermasse 3 einen Druckausgleich im Speicher 12 her. Gleichzeitig werden damit temperaturbedingte Dehnungen aufgefangen.

Das Heizelement für die Elektroheizung besteht wieder wie in Figur 3 aus einem Widerstandsrohr 63, dessen Zuführungen 631, 632 verdickt ausgebildet sind, damit die Wärmeentwicklung auf das eigentliche Widerstandsrohr 63 im Inneren des Speicherkerns 4 konzentriert wird. Das Potential des Behälters 23 liegt an Erde. Auf Erdpotential wird auch der Zufürung 632 bei Wärmeentnahme gelegt. Auf diese Weise ist es möglich, eine thermisch und elektrisch belastete Vakuumdurchführung durch die einfache Schweißverbindung 633 zu ersetzen.

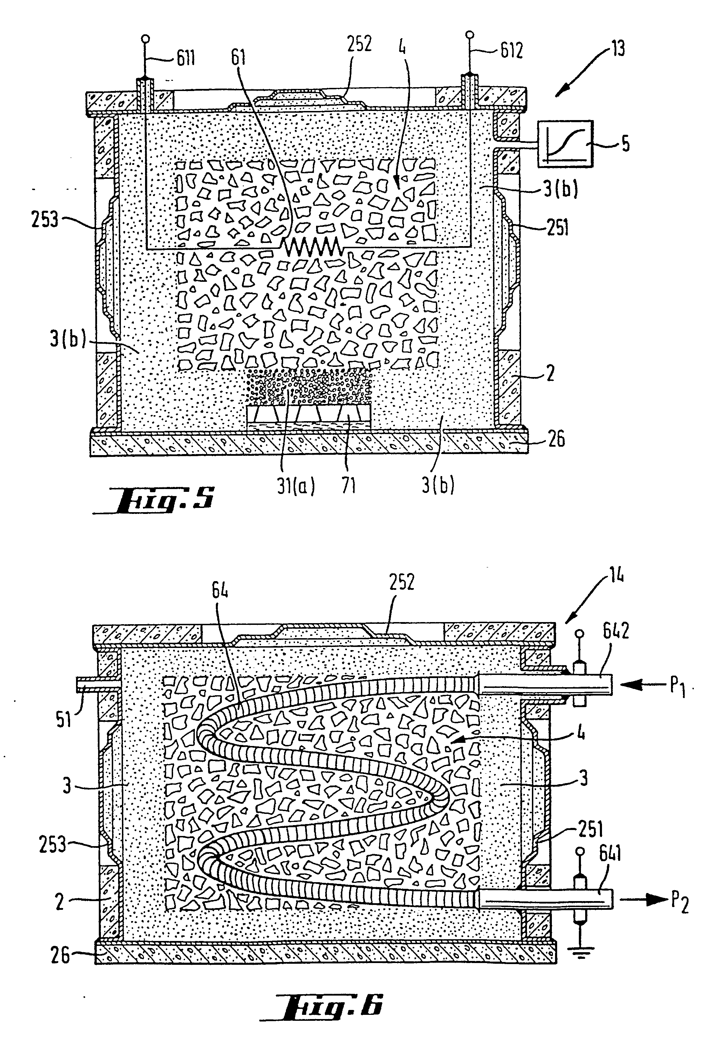

In Figur 5 ist eine zweite Ausführungsform eines Speichers 13 für hohe Temperaturen mit Druckausgleich und mit einem flächenhaften Wärmetauscher 71 wiedergegeben. Der Speicher 13 besteht aus dem Speicherkern 4, der Isolierschicht 3 und einem Außenbehälter 2, beispielsweise aus Beton, teilweise mit federnd elastischen Wandteilen 251, 252, 253 zum Druckausgleich. Im Innern der Speichermasse 4 ist wieder ein Heizwiderstand 61 mit den elektrischen Zuführungen 611, 612 angeordnet. Der Speicher 13 steht auf einer Bodenplatte 26. Wie bereits in Verbindung mit dem Speicher 1 nach Figur 1 beschrieben worden ist, ist bei dem Speicher 13 eine Wärmeentnahme durch die Außenhaut vorgesehen. Hierzu ist wieder ein Bereich 31 der Isoliermasse von grober Körnung, was bei einer generellen und gesteuerten Verschlechterung des Vakuums an dieser Stelle zu einem Wärmefluß durch die Isolierschicht 3 hindurch zum Wärmetauscher 71 führt. Von dort wird die Wärme zum Verbraucher, beispielsweise dem Heizsystem eines Wohnhauses, transportiert.

In Figur 6 ist ein Wärmespeicher 14 für hohe Temperaturen mit einem Druckausgleich und einem Rippen-Wärmetauscherrohr 64 wiedergegeben. Der Speicher 14 besteht aus dem Speicherkern 4, der Isolierschicht 3 und einem Außenbehälter 2, beispielsweise aus Beton, mit teilweise federnd elastischen Wandteilen 251, 252, 253 zum Druckausgleich. Der Speicher 14 steht auf einer Bodenplatte 26. Das Heizelement ist zur Erhöhung des Wärmeüberganges und zur Erhöhung des Ohmschen Widerstandes als Rippenrohr 64 ausgebildet. Die Wärme kann in dem Heizelement entweder elektrisch erzeugt oder durch heiße Verbrennungsgase eingeleitet und hierdurch die Speichermasse im Speicherkern 4 aufgeheizt werden. Die Ausbildung der beiden Zuführungen 641,

4

642, ihre Durchführung durch den Außenbehälter 2 ist bereits in bezug auf Figur 3 genau beschrieben. Das Gleiche gilt auch für die Fließrichtung eines Wärmeträgermediums, entsprechend den Pfeilen P₁, P₂, durch das Wärme aus dem Speicherkern 4 entnommen werden soll.

Vorstehend wurde die Erfindung an Hand von fünf Speichern in einer ersten Ausbildung als Hochtemperaturspeicher beschrieben. Als "Hochtemperatur" werden hierbei Temperaturen oberhalb 100° C angesehen. Alle vorbeschriebenen Speicher 11, 12, 13, 14 haben die konstruktive Eigenschaft, daß Speicherkern 4 und Isolierschicht 3 unter gleichem Druck stehen.

## Patentansprüche

1. Langzeitwärmespeicher mit einem Außenbehälter, einer aufheizbaren oder kühlbaren Speichermasse in einem Speicherkern und einer zwischen Außenbehdlter und Speicherkern angeordneten Isolierschicht aus einer unter Vakuum stehenden körnigen Isoliermasse, dadurch gekennzeichnet, daß die Isolierschicht (3) und die Speichermasse druckmäßig miteinander verbunden sind.

2. Langzeitwärmespeicher nach Anspruch 1, dadurch gekennzeichnet, daß die Teilchen der Isolierschicht (3) mit Magnesiumoxid als einer Infrarot reflektierenden Masse beschichtet sind.

3. Langzeitwärmespeicher nach Anspruch 1 oder 2, dadurch gekennzeichnet, daß in der Isolierschicht (3) mit in bezug auf die Körnung der Isoliermasse (b) gleich-mäßigen Aufbau, ein als Wärmetauscher (7; 71) dienender Bereich (31) mit einer Isoliermasse groberer Körnung versehen ist, wobei die Wärmeentnahme über die Einstellung des Vakuums steuerbar ist (Fig. 2).

4. Langzeitwärmespeicher nach Anspruch 1 oder 2, gekennzeichnet durch ein als elektrischer Heiswiderstand (61) oder zur Heizung mit Verbrennungswärme oder zur Wärmeentnahme dienendes Rohr (62, 63, 64).

5. Langzeitwärmespeicher nach Anspruch 4, gekennzeichnet durch ein Rippen-Wärmetauscherrohr (64).

6. Längzeitwärmespeicher nach Anspruch 4 oder 5, dadurch gekennzeichnet, daß eine Zuführung (621, 632, 641) des Rohres (62, 63, 64) mit der Wandung (22, 23) des Außenbehälters (2) unmittelbar verbunden ist und die andere Zuführung (622, 631, 642) elektrisch isoliert durch die Wandung (22, 23) des Außenbehälters (2) durchgeführt ist, wobei die unmittelbar verbundene Durchführung (621, 632, 641) die relativ wärmere der beiden Durchführungen ist.

7. Langzeitwärmespeicher nach den Ansprüchen 1 bis 6, gekennzeichnet durch ein Infrarot-Fenster zur Strahlungsheizung und/oder zum Betrieb eines Infrarot-Empfängers zur Stromerzeugung aus der aus dem Speicher (1) austretenden Infrarotstrahlung.

## Claims:

1. Long term haat store with an outer container (2), a heatable or coolable storage mass in a storage core (4) and an insulating layer (3) of a granular insulating mass standing under vacuum and arranged between outer container (2) and storage core (4), characterised thereby, that the insulating layer (3) and the storage mass are each connected with the other in terms of prassure.

2. Long term heat store according to claim 1, characterised thereby, that the particles of the insulating layer (3) are coated with magnesium oxide as a mass reflecting infra-red.

3. Long term heat store according to claim 1 or 2, characterised thereby, that a region (3l) serving as heat exchanger (7; 71) is provided with an insulating mass of coarser granulation in the insulating layer (3) with uniform build-up in respect of the granulation of the insulating mass (b), wherein the heat withdrawal is controllable by way of the setting of the vacuum (Fig. 2).

4. Long term heat store according to claim 1 or 2, characterised by a tube (62, 63, 64) serving as electrical heating resistor (61) or for heating by heat of combustion or for heat withdrawal.

5. Long term heat store according to claim 4, characterised by a ribbed heat exchanger tube (64).

6. Long term heat store according to claim 4 or 5, characterised thereby, that one feed (621, 632, 641) of the tube (62, 63, 64) is directly connected with the wall (22, 23) of the outer container (2) and the other feed (622, 631, 642) is led electrically insulated through the wall (22, 23) of the outer container (2), wherein the directly connected feedthrough (621, 632, 641) is the relatively warmer one of both the feedthroughs.

7. Long term heat store according to the claims 1 to 6, characterised by an infra-red window for radiation heating and/or for the operation of an infra-red receiver for the generation of current from the infra-red radiation issuing from the store (1).

## Revendications.

1. Accumulateur de chaleur de longue durée comportant un récipient extérieur (2), une masse d'accumulation dans un noyau d'accumulation (4) susceptible d'être chauffée ou refroidie, et une couche isolante (3) constituée par une masse isolante granulaire sous vide, disposée entre le récipient extérieur (2) et le noyau d'accumulation (4), caractérisé en ce que la couche isolante (3) et la masse d'accumulation sont reliées par pression.

2. Accumulateur de chaleur de longue durée selon la revendicatioh 1, caractérisé en ce que lesparticules de la couche isolante (3) sont revêtues à'oxyde de magnésium en tant que matière réfléchissant les infrarouges.

3. Accumulateur de chaleur de longue durée selon la revendication 1 ou 2, caractérisé en ce que, dans la couche isolante (3) ayant une structure uniforme par rapport à la granulométrie de la masse isolante (b), une zone (31) servant d'échangeur thermique (7; 71) est pourvue d'une masse isolante de granulométrie plus grossière, le prélèvement de chaleur pouvant être commandé par le réglage du vide (figure 2).

4. Accumulateur de chaleur de longue durée selon la revendication 1 ou 2, caractérisé par un tube (62, 63, 64) servant de résistance chauffante électrique (61) ou servant au chauffage par chaleur de combustion, ou au prélèvement de chaleur.

5. Accumulateur de chaleur de longue durée selon la revendication 4, caractérisé par un tube d'échangeur thermique à ailettes (64).

6. Accumulateur de chaleur de longue durée selon la revendication 4 ou 5, caractérisé en ce qu'une traversée (621, 632, 641) du tube (62, 63, 64) est directement reliée à la paroi (22, 23) du récipient extérieur (2), et l'autre traversée (622, 631, 642) traversée la paroi (22, 23) du récipient extérieur (2) en étant isolée électriquement, la traversée directement reliée (621, 632, 641) étant la traversée relativement la plus chaude des deux.

7. Accumulateur de chaleur de longue durée selon l'une des revendications 1 à 6, caractérisé par une fenêtre à infrarouges pour le chauffage par rayonnement et/ou pour faire fonctionner un récepteur à infrarouges pour produire du courant à partir du rayonnement infrarouge sortant de l'accumulateur (1).

*Fig. 1*

*Fig. 2*

**Fig. 3**

**Fig. 4**

**Fig.5**

**Fig.6**